# EUROPEAN PATENT SPECIFICATION

(11) **EP 1 618 474 B1**
(45) Date of publication and mention of the grant of the patent: **27.05.2009**
(21) Application number: 04760489.7
(22) Date of filing: 19.03.2004
(51) Int. Cl.: G06F 9/46

(54) **APPARATUS AND METHODS FOR DESYNCHRONIZING OBJECT-ORIENTED SOFTWARE APPLICATIONS IN MANAGED RUNTIME ENVIRONMENTS**
VORRICHTUNGEN UND VERFAHREN ZUM ENTSYNCHRONISIEREN VON OBJEKTORIENTIERTEN SOFTWAREANWENDUNGEN IN VERWALTETEN LAUFZEITUMGEBUNGEN
DISPOSITIF ET PROCEDES POUR DESYNCHRONISER DES LOGICIELS D'APPLICATION ORIENTES OBJET DANS DES ENVIRONNEMENTS A TEMPS D'EXECUTION CONTROLE

(30) Priority: 30.04.2003 US 427320
(43) Date of publication of application: 25.01.2006
(73) Proprietor: Intel Corporation, Santa Clara, CA 95052 (US)
(72) Inventor: WU, Gansha, Room 302, 1 unit, Chao Yang District, Beijing 100028 (CN); LUEH, Guei-Yuan, San Jose, CA 95120 (US); SHI, Xiaohua, Haidian District, Beijing, 100086 (CN)
(74) Representative: Beresford, Keith Denis Lewis
(86) International application number: PCT/US2004/008588
(87) International publication number: WO 2004/099944

(56) References cited:
- WO-A-02/41143
- US-A- 5 617 569
- US-A- 5 920 720
- US-A- 6 141 794
- US-B1- 6 330 714
- RUF E: "Effective synchronization removal for Java" SIGPLAN NOTICES ACM USA, vol. 35, no. 5, May 2000 (2000-05), pages 208-218, XP002301519 ISSN: 0362-1340
- BOGDA J ET AL: "Removing unnecessary synchronization in Java" SIGPLAN NOTICES ACM USA, vol. 34, no. 10, October 1999 (1999-10), pages 35-46, XP002301518 ISSN: 0362-1340

## Description

### FIELD OF THE DISCLOSURE

The present disclosure relates generally to managed runtime environments and, more specifically, to apparatus and methods for desynchronizing object-oriented software applications in managed runtime environments.

### BACKGROUND

The need for increased software application portability (i.e., the ability to execute a given software application on a variety of platforms having different hardware, operating systems, etc.), as well as the need to reduce time to market for independent software vendors (ISVs), have resulted in increased development and usage of managed runtime environments.

Managed runtime environments are typically implemented using a dynamic programming language such as, for example, Java and C#. A software engine (e.g., a Java Virtual Machine (JVM), Common Language Runtime (CLR), etc.), which is commonly referred to as a runtime environment, executes the dynamic program language instructions. The runtime environment interposes or interfaces between dynamic program language instructions (e.g., a Java program or source code) to be executed and the target execution platform (i.e., the hardware and operating system(s) of the computer executing the dynamic program) so that the dynamic program can be executed in a platform independent manner.

Dynamic program language instructions (e.g., Java instructions) are not statically compiled and linked directly into native or machine code for execution by the target platform (i.e., the operating system and hardware of the target processing system or platform). Instead, dynamic program language instructions are statically compiled into an intermediate language (e.g., bytecodes), which may interpreted or subsequently compiled by a just-in-time (JIT) compiler into native or machine code that can be executed by the target processing system or platform. Typically, the JIT compiler is provided by a runtime environment that is hosted by the operating system of a target processing platform such as, for example, a computer system. Thus, the runtime environment and, in particular, the JIT compiler, translates platform independent program instructions (e.g., Java bytecodes, Common Intermediate Language or CIL, etc.) into native code (i.e., machine code that can be executed by an underlying target processing system or platform).

To improve overall performance, many dynamic programming languages and their supporting managed runtime environments provide infrastructure that enables concurrent programming techniques such as, for example, multi-threading, to be employed. In particular, many dynamic programming languages provide concurrent programming support at the language level via synchronization keywords and at the runtime level via synchronization primitives.

Software designers typically employ synchronization within a software object so that multiple concurrent threads of execution can share or access the object and its variables without causing a conflict or contention. For example, in the case of a globally accessible object (i.e., a public object), the software designer typically assumes that conflict or contention can occur during runtime and includes appropriate synchronization operations within the object to prevent such a conflict or contention. In this manner, the software designer can guarantee that the globally accessible object is "thread safe" (i.e., can be employed in a multi-threading runtime environment without conflicts or contention). In addition, many dynamic programming languages provide software designers with one or more libraries of thread safe software objects that can be used within multi-threading runtime environments without concern for contentions or conflicts.

Unfortunately, the processing overhead associated with object synchronization results in a significant increase in execution time. For example, in the case of some well-known Java applications and benchmarks, synchronization overhead may consume between about ten and twenty percent of overall execution time. Furthermore, synchronization is usually employed as a safeguard to prevent contentions during runtime (particularly in the case of object libraries), regardless of whether such synchronization is actually required during runtime.
Ruf, E: "Effective synchronisation removal for Java," SIGPLAN Notices ACM USA, vol. 35, no. 5, May 2000, pages 208-218, discloses a technique for removing unnecessary synchronisation operations from statically compiled Java programs. The technique is an extension to the escape analysis approach.

### BRIEF DESCRIPTION OF THE DRAWINGS

Fig.1 is a block diagram of an example architecture that may be used to implement the desynchronization apparatus and methods described herein.

Fig. 2 illustrates an example high level synchronized code block.

Fig. 3 illustrates an example low level form of the synchronized code block shown in Fig. 2.

Fig. 4 illustrates an example high level synchronized method.

Fig. 5 illustrates an example low level form of the synchronized method shown in Fig. 4.

Fig. 6 is a flow diagram of an example manner in which the just-in-time compiler shown in Fig. 1 may be configured to remove synchronization from object-oriented applications.

Fig. 7 is a more detailed flow diagram of an example manner in which the just-in-time compiler shown in Fig. 1 may be configured to remove synchronization from object-oriented applications.

Fig. 8 is a more detailed example of one manner in which the just-in-time compiler shown in Fig. 1 may be configured to modify virtual dispatch tables.

Figs. 9 and 10 illustrate an example polymorphic method implementation.

Fig. 11 illustrates example virtual dispatch tables that may be used in conjunction with the example polymorphic method shown in Figs. 9 and 10.

Fig. 12 is example code of a further variation of the method Derived2 shown in Fig. 9.

Fig. 13 is an example virtual dispatch table that may be generated using the table slicing technique described herein to support the code shown in Fig. 12.

Fig. 14 is an example processor system that may be used to implement the apparatus and methods described herein.

### DETAILED DESCRIPTION

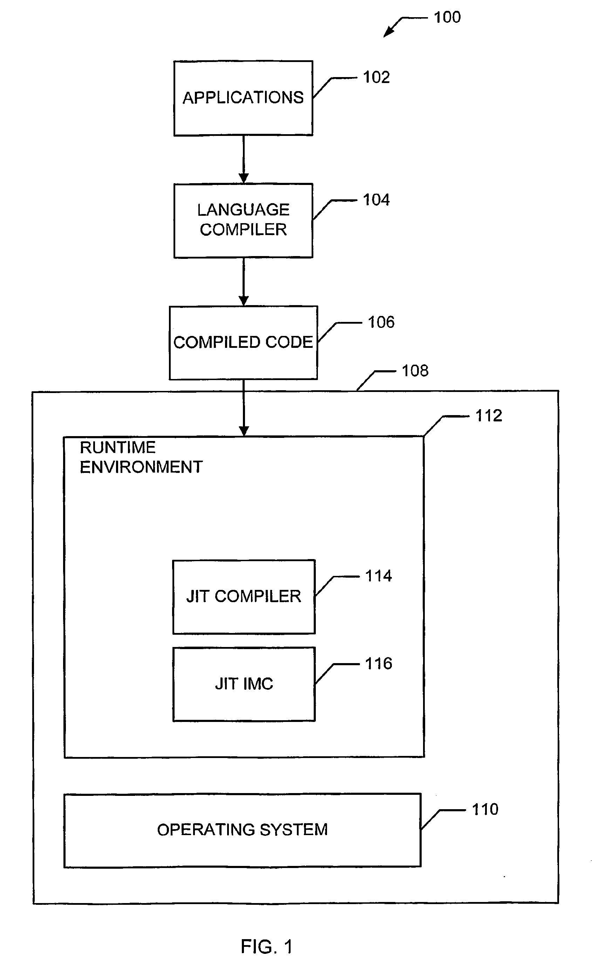

Fig. 1 is a block diagram of an example architecture 100 that may be used to implement the desynchronization apparatus and methods described herein. For the example architecture 100, one or more software applications 102, which are composed of one of more dynamic programming languages and/or instructions, are provided to a language compiler 104. The applications 102 may be written using a platform independent language such as, for example, Java or C#. However, any other dynamic or platform independent computer language or instructions could be used instead. In addition, some or all of the applications 102 may be stored within the system on which the applications are to be executed. Additionally or alternatively, some or all of the applications may be stored on a system that is separate (and possibly remotely located) from the system on which the applications 102 are to be executed.

The language compiler 104 statically compiles one or more of the applications 102 to generate compiled code 106. The compiled code 106 is intermediate language code or instructions (e.g., bytecodes in the case where the complied application(s) are written in Java) that is stored in a binary format in a memory (not shown). As with the applications 102, the compiled code 106 may be stored locally on a target system 108, on which the compiled code 106 is to be executed.

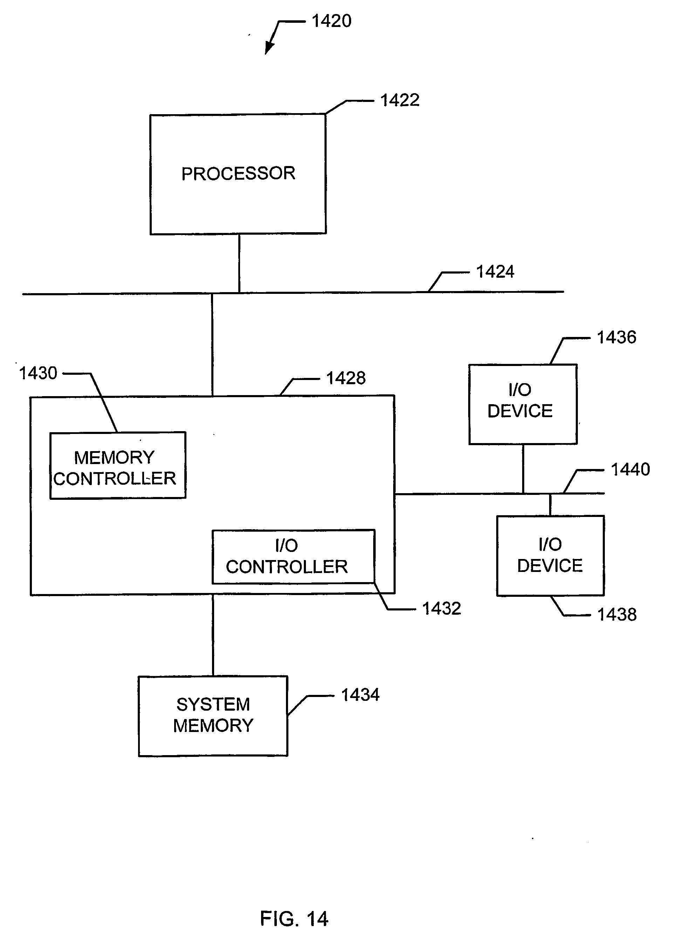

The target system 108 may be a computer system or the like such as that described in greater detail below in connection with Fig. 14. The target system 108 may be associated with one or more end-users or the like. Additionally or alternatively, the compiled code 106 may be delivered to the target system 108 via a communication link or links including, for example, a local area network, the Internet, a cellular or other wireless communication system, etc.

One or more portions of the compiled code 106 (e.g., one or more software applications) may be executed by the target system 108. In particular, an operating system 110 such as, for example, Windows, Linux, etc., hosts a runtime environment 112 that executes one or more portions of the compiled code 106. For example, in the case where the compiled code 106 includes Java bytecodes, the runtime environment 112 is based on a Java Virtual Machine (JVM) or the like that executes Java bytecodes.

The runtime environment 112 loads one or more portions of the compiled code 106 (i.e., the intermediate language instructions or code) into a memory (not shown) accessible by the runtime environment 112. Preferably, the runtime environment 112 loads an entire application (or possibly multiple applications) into the memory and verifies the compiled or intermediate language code 106 for type safety.

After the application or multiple applications are loaded into memory by the runtime environment 112, the intermediate language instructions associated with methods or objects called by the application being executed or otherwise needed to execute the application may be processed by a just-in-time (JIT) compiler 114. The JIT compiler 114 compiles the intermediate language instructions to generate native or machine code that is executed by one or more processors (such as, for example, the processor 1422 shown in Fig. 14) within the computer system 108.

The JIT compiler 114 may store native code (i.e., machine code compatible with and, thus executable by, the computer system 108) in a JIT in-memory cache (JIT IMC) 116. In this manner, the runtime environment 112 can re-use native code associated with a previously compiled method that is invoked or called more than once. In other words, intermediate language instructions compiled into native code and stored in the JIT IMC 116 can be re-used and executed multiple times by the runtime environment 112.

Although the JIT IMC 116 is depicted as part of the JIT compiler 114 within the runtime environment 112, other configurations for the JIT IMC 116 are possible. For example, the JIT IMC 116 could be part of another data structure within other runtime modules, sessions or environments (not shown) hosted by the operating system 110. In other examples, particularly those involving virtual calls, the JIT IMC 116 may be implemented so that native code associated with methods to be called is stored in well-known data structure such as, for example, virtual dispatch tables.

In general, dynamic programming languages such as, for example, Java, provide two types of synchronization to enable software designers to generate thread safe code or software objects. As noted above, a synchronized software object can only be accessed by one execution thread at a time, thereby preventing a conflict or contention associated with parameters or variables used by the object from occurring. In other words, global objects and other objects accessible by more than one execution thread can be made thread safe by introducing software lock and unlock mechanisms that prevent more than one thread from accessing the objects. One such type of synchronization enables a block of code (i.e., one or more statements) to be synchronized. Another such type of synchronization enables a method (i.e., a call to a block of code) to be synchronized.

Dynamic programming languages typically provide both high level or language level synchronization statements and low level or managed runtime level primitives for purposes of synchronizing code blocks and methods. For example, in the case of Java, the keyword "synchronized" is used at the language level (i.e., high level) to declare a block or method to be protected by synchronization. In addition, in the case of Java, the low level or managed runtime primitives corresponding to the language level keyword "synchronized" are "monitorenter" and "monitorexit." However, for purposes of simplifying the following discussion, low level synchronization primitives will be referred to as "lock" and "unlock" and the high level or language level synchronization statements will be referred to using the keyword "synchronized."

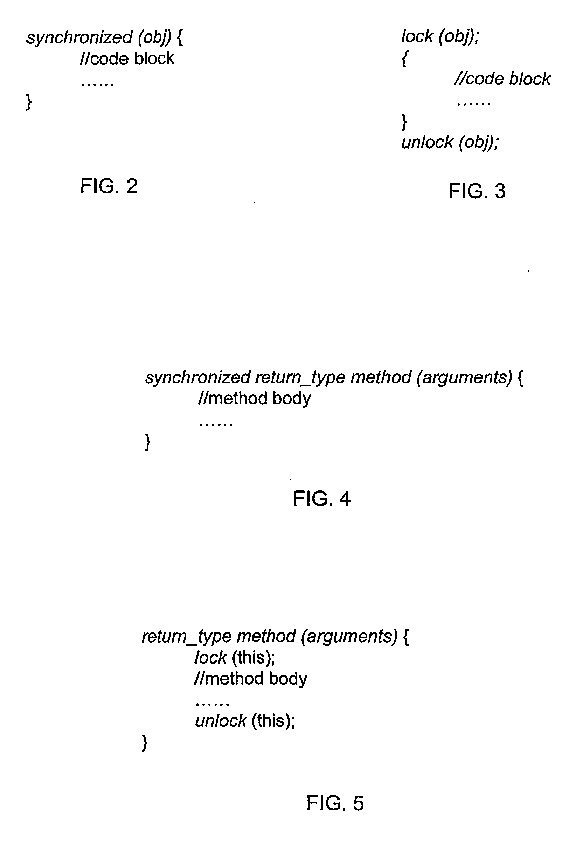

Fig. 2 illustrates an example high level synchronized code block and Fig. 3 illustrates an example low level form of the synchronized code block shown in Fig. 2. As can be seen in Fig. 3, the keyword "synchronized" of Fig. 2 has been replaced with "lock" and "unlock" primitives that encapsulate the code block for which synchronization protection is desired.

Fig. 4 illustrates an example high level synchronized method and Fig. 5 illustrates an example low level form of the synchronized method shown in Fig. 4. Again, the keyword "synchronized" is replaced by the "lock" and "unlock" primitives, which encapsulate the method body for which synchronization protection is desired.

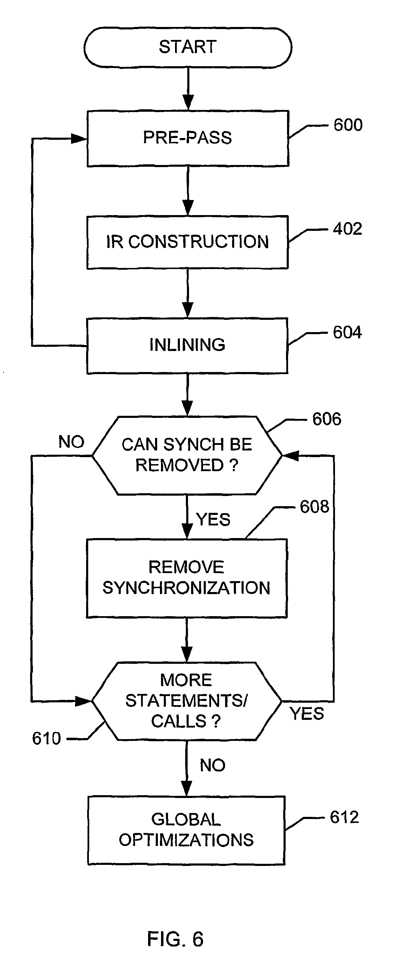

Fig. 6 is a flow diagram of an example manner in which the JIT compiler 114 shown in Fig. 1 may be configured to remove synchronization from object-oriented applications. The method depicted in Fig. 6 includes a number of well-known JIT compilation phases that are commonly referred to as the front end process of the JIT compiler 114 (Fig. 1). In particular, in a pre-pass phase (block 600) of the JIT compilation process, the bytecodes (e.g., the compiled code 106) are traversed or scanned and information such as, for example, block boundaries, operand stack depth, etc. is collected by the JIT compiler 114 (Fig. 1). In an intermediate representation (IR) building or construction phase (block 602), the JIT compiler 114 uses the information collected during the pre-pass phase (block 600) to build the control-flow graph and IR instruction sequences for each basic code block. In addition, the JIT compiler 114 may also perform local common sub-expression elimination across extended basis blocks.

Following IR construction (block 602), the JIT compiler 114 (Fig. 1) performs inlining (block 604), which identifies call sites (i.e., objects, methods, etc.) that are candidates for inlining. When performing inlining (block 604), the JIT compiler 114 may repeat the pre-pass and IR construction phases (blocks 600 and 602, respectively) to merge the intermediate representation of the method to be inlined with the intermediate representation of the code calling the method to be inlined.

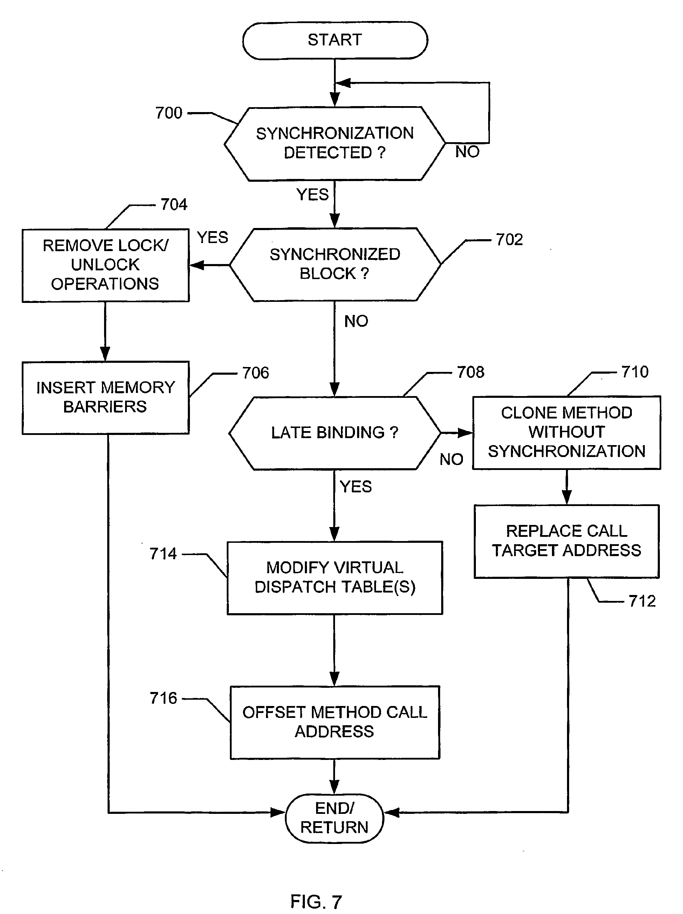

In contrast to known JIT compiler front end processing, the JIT compiler 114 (Fig. 1) removes synchronization from synchronized code blocks and/or method calls. As described in greater detail in connection with Fig. 7 below, the JIT compiler 114 determines if synchronization can be removed (block 606) and, if possible, removes synchronization or desynchronizes each synchronized statement, block of statements and/or method calls (block 608) composing the compiled code 106 (Fig. 1) in different manners based on the nature of the code from which the synchronization is to be removed. For example, desynchronization may be performed in different manners based on whether the code associated with a block, a method call, etc.

A determination of whether synchronization can be removed from compiled code can be based on known techniques. For example, escape analysis is a well-known whole program analysis technique that can be used to identify non-global objects and/or global objects without contention from which synchronization can be removed safely (i.e., without causing a runtime contention or conflict). However, the details of escape analysis and other techniques for determining whether synchronization can be removed from compiled dynamic code are generally well known to those having ordinary skill in the art and, thus, are not described further herein.

After determining that synchronization cannot be removed (block 606) or after removing synchronization (block 608), the JIT compiler 114 (Fig. 1) determines if there are more statements or method calls to be processed for synchronization removal (block 610). If there are more statements or method calls to be processed, the JIT complier 114 returns control to block 606. On the other hand, if there are no more statements or method calls to be processed (block 610), the JIT compiler 114 performs global optimizations (block 612). As is known by those having ordinary skill in the art, when performing global optimizations, the JIT compiler 114 performs copy propagation, constant folding, dead code elimination and null pointer check elimination functions or activities. Although not shown in Fig. 6, the JIT compiler 114 may continue processing the code following performance of global optimizations (block 612) using a number of well-known back end JIT compilation processes.

Fig. 7 is a more detailed flow diagram of an example manner in which the JIT compiler 114 shown in Fig. 1 may be configured to remove synchronization from object-oriented applications or code. Initially, the JIT compiler 114 determines or detects if the code being processed includes synchronization (block 700). In general, synchronization can be detected by determining if, for example, the code being processed contains "lock" and "unlock" primitives. In the case where the code being processed is Java-based, the JIT compiler 114 may make such a determination by determining if the primitives "monitorenter" and "monitorexit" are present. If the JIT compiler 114 does not detect synchronization at block 700, the JIT compiler 114 waits at block 700.

On the other hand, if the JIT compiler 114 detects synchronization at block 700, the JIT compiler 114 determines if the synchronized code is a block (i.e., one or more statements). If the JIT compiler 114 determines that the synchronized code is a block, the JIT compiler 114 removes the operations associated with the "lock" and "unlock" primitives from the code being processed (block 704), thereby eliminating the synchronization for that code. After removing the operations associated with the "lock" and "unlock" primitives, the JIT compiler 114 may insert memory barriers (block 706) (i.e., filler) before and/or after the block being processed to maintain memory consistency required by the memory model associated with the type of code being processed (e.g., the Java memory model in the case Java-based code is being processed).

In some cases, a valid elimination of synchronization may subsequently become invalid (e.g., in the case where dynamic class loading is used). In those cases, some padding space may be inserted before and after the block being processed, thereby enabling the padded space to be patched back to operations associated with "lock" and "unlock" primitives.

In the case that the JIT compiler 114 determines that the code being processed is not a synchronized block (block 702), a synchronized method call is being processed and the JIT compiler 114 next determines if the synchronized method call is classified as a virtual (i.e., late binding) call (block 708). As is known, with late binding calls, the address associated with the code being called is not known at the time of compilation by the JIT complier 114. In the case of Java-based code including the language "invokevirtual" or "invokeinterface" are virtual calls that are invoked using virtual dispatch tables. Virtual dispatch tables enable a JIT compiler to index to the appropriate executable code portions associated with a virtual method call at runtime. On the other hand, Java-based code including the language "invokestatic" or "invokespecial" are not virtual calls and, thus, include address information at the time of compilation.

If the JIT compiler 114 (Fig. 1) determines at block 708 (Fig. 7) that the method call is not late binding, the method call is early binding (i.e., the address associated with the called or target code is known at the time of language compilation) and the JIT compiler 114 clones the method without synchronization statements (block 710). When cloning the method, the JIT compiler 114 may copy the method but leaves out the synchronization statements. Alternatively, the JIT compiler 114 may just recompile the method in the event that the method does not include synchronization language. In any event, after cloning the method (block 710), the JIT compiler 114 replaces the call target address with the code address of the cloned method (i.e., the address of the desynchronized method) (block 712).

If the JIT compiler 114 determines at block 708 that the code being processed is late binding (e.g., includes a virtual method call), the JIT compiler 114 modifies the virtual dispatch table(s) associated with the method (block 714) and offsets the method call address (block 716) as described in greater detail below. However, before discussing the manner in which the JIT compiler 114 modifies the virtual dispatch table(s) (block 714) and offsets the method call (block 716), a brief discussion of late binding methods or virtual calls is provided below.

A virtual dispatch table, which is often referred to as a vtable, is a structure in the header of every class object that contains the memory addresses of the actual code associated with the properties and methods implemented in the interface. A vtable can be diagrammatically represented as a column of indexed addresses for the code composing a software object (e.g., a method or collection of code statements). The code for invoking a virtual call is typically represented using the language "call[vtable + offset]," where "vtable" is the address of the receiver (i,e., the object being called) and "offset" is the index within the vtable for the object of the particular method being invoked. Virtual calls are polymorphic (i.e., can have more than behavior, response or implementation) based on the manner in which the call is made at runtime. As a result, a virtual call may have multiple targets depending on the runtime type of the receiver.

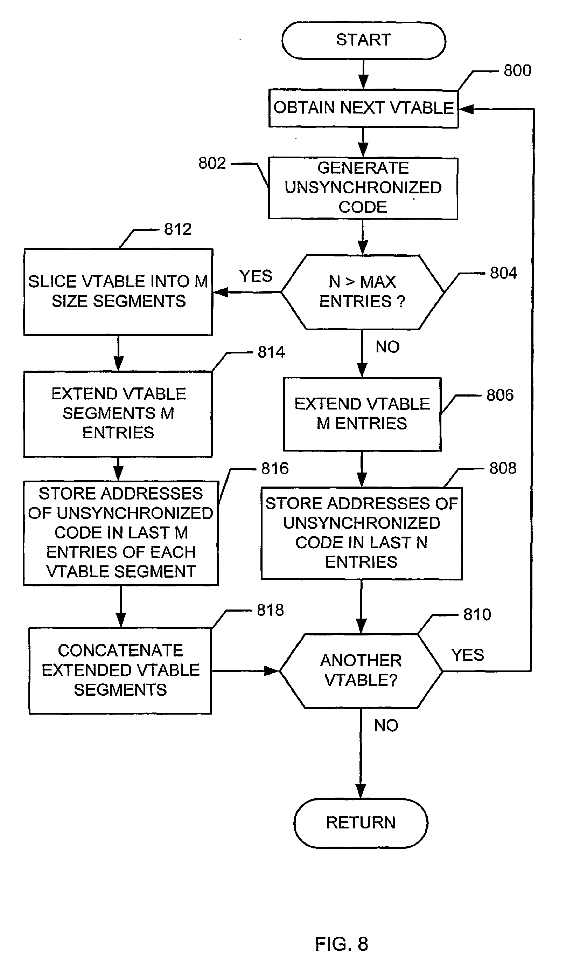

Fig. 8 is a more detailed flowchart depicting an example manner in which the JIT compiler 114 (Fig. 1) may be configured to perform the virtual dispatch table (vtable) modification associated with block 714 of Fig. 7. Initially, the JIT compiler 114 (Fig. 1) obtains a vtable associated with the virtual call being processed (block 800). After obtaining the vtable to be processed, the JIT compiler 114 creates an unsynchronized version of the code associated with the vtable (block 802). The unsynchronized version can be generated by cloning the method without synchronization in a manner similar or identical to that performed at block 710 of Fig. 7.

After generating the unsynchronized code, the JIT compiler 114 determines if the number of entries (N) in the vtable obtained at block 800 is greater than the maximum number of entries (M) found in any vtable associated with the method currently being processed (block 804) as determined prior to the JIT compilation processs. If N is less than or equal to M, the JIT compiler 114 extends the vtable being processed by M entries (i.e., adds or appends M rows to the column of indexed entries representing the vtable) (block 806). After extending the vtable being processed (block 806), the JIT compiler 114 stores the addresses of the unsynchronized code in the last N entries of the vtable (block 808), thereby leaving the middle M-N entries unused. The JIT compiler 114 then determines if there are any more vtables associated with the method being processed (block 810). If there is at least one remaining vtable, the JIT compiler 114 returns to block 800. Otherwise, the JIT compiler 114 returns control to block 716 of Fig. 7.

If the JIT compiler 114 determines at block 804 that the number of entries (N) associated with the vtable being processed is greater than M (which is determined at language compilation time), the JIT compiler 114 slices the vtable into segments having M entries (block 812). Of course, one of the segments will have fewer than M entries if the total number of entries (i.e., N) is not an integer multiple of M. In practice, N may exceed M in cases where the code being processed supports dynamic class loading. In a dynamic class loading context, vtables for newly loaded classes (i.e., objects) may exceed the value M, which is determined at language compilation time (i.e., prior to the time at which the new classes are loaded).

In any event, after the JIT complier 114 (Fig. 1) slices the vtable being processed into M-size segments (block 812), each of the segments is extended by M entries (block 814) and the addresses for the unsynchronized code are stored in the last M entries of each vtable segment (block 816). The JIT compiler 114 then concatenates the extended vtable segments into a single vtable (block 818) and checks if there is another vtable to process (block 810).

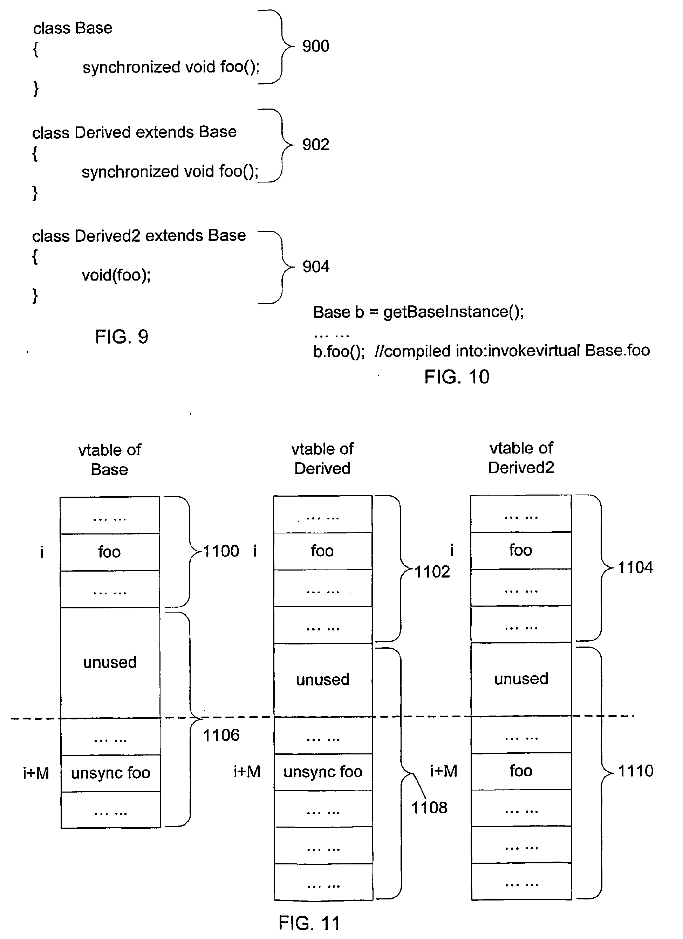

To better understand the manner in which the example methods depicted in Figs. 7 and 8 and described above desynchronize a virtual method call (i.e., a late binding call), example method code and associated vtable layouts are described in connection with Figs. 9-13 below. Figs. 9 and 10 depict an example polymorphic method and Fig. 11 depicts the modified vtables generated by the example method shown in Fig. 8 when desynchronizing the example code of Figs. 9 and 10. For purposes of the example of Figs. 9-11, dynamic class loading is not supported and, thus, the value N for each of the vtables shown in Fig. 11 cannot be greater than the maximum number of vtable entries (M) determined at language compilation time.

Referring to Figs. 9 and 10, a first or parent object 900 defines a class "Base," a first subclass object 902 referred to as "Derived" overrides "Base" and a second subclass object 904 referred to as "Derived2" overrides "Base." In the example of Fig. 9, "Base" and "Derived" implement a synchronized version of the method "foo," and "Derived2" implements an unsynchronized version of the method "foo."

Thus, when the JIT compiler 114 (Fig. 1) compiles the code shown in Fig. 10, the statement "b.foo()" is compiled into "invokevirtual Base.foo," which can invoke or call three possible targets (i.e., "Base.foo," "Derived.foo" and "Derived2.foo"). Original vtable portions 1100, 1102 and 1104 shown in Fig. 11 (which is discussed in greater detail below) corresponding respective targets "Base.foo," "Derived.foo" and "Derived2" enable the virtual call "invokevirtual Base.foo" to behave in a polymorphic manner. In particular, polymorphism is achieved because for each implementation (i.e., "Base.foo," "Derived.foo" and "Derived2.foo") the method "foo" is placed at the same index (i.e., "i") within its respective vtable.

Thus, in the case where the JIT compiler 114 (Fig. 1) removes synchronization form a virtual call or polymorphic method such as the example shown in Figs. 9 and 10, the removal process preserves the relationship of the code associated with the different implementations between their respective vtables. In other words, the different implementations of the polymorphic method are located at the same index location within each of the respective vtables. In addition, the synchronization removal process used to remove synchronization from a virtual method call must ensure that all implementations called at runtime are not synchronized.

To preserve the vtable relationships and ensure that all implementations called at runtime are not synchronized, the JIT complier 114 modifies the layout of the vtables associated with the implementation(s) of a virtual method (block 714 of Fig. 7). As described in connection with Fig. 8, the vtable modification includes extension and, in some cases, slicing of one or more vtables associated with the method call being processed. Continuing with the example of Figs. 9-11, the JIT compiler 114 appends extended portions 1106, 1108 and 1110 to respective original vtable portions 1100-1104. In particular, the vtables are extended so that if the original part includes N entries, an additional M entries are appended to the table for a total of M+N entries. The value M is often selected to be large enough to accommodate all possible object types. In other words, because the value N (i.e., the number of entries in the original vtable part) may vary across the vtables, the value M (which is the same for all vtables) may be selected so that it is always greater than the largest N. Alternatively, M may be selected to minimize unused space (as opposed to maximizing simplicity). For example, setting M = 1 results in a vtable layout in which original code and unsynchronized code are contiguous within the table (i.e., with no unused space between the original code and unsynchronized code).

For each of the vtables shown in Fig. 11, the first N entries are associated with the original part (i.e., the parts 1100-1104), the last N entries contain the addresses associated with an unsynchronized version of the method addressed by the original part and the middle M-N entries are unused. Thus, within each vtable, an unsynchronized version of the method addressed by the original part is always located at the index i+M, where "i" is the index location of the addresses of method associated with the original part.

As a result of modifying the vtables (block 714 of Fig. 7) in the manner described above, the JIT compiler 114 (Fig. 1) can effectively remove synchronization from a synchronized virtual method call by transforming via an additional offset (block 716 of Fig. 7) the virtual call to be "call[vtable+offset+M]," thereby guaranteeing that, regardless of the method implementation called during runtime, an unsynchronized version or implementation of the invoked method will be called.

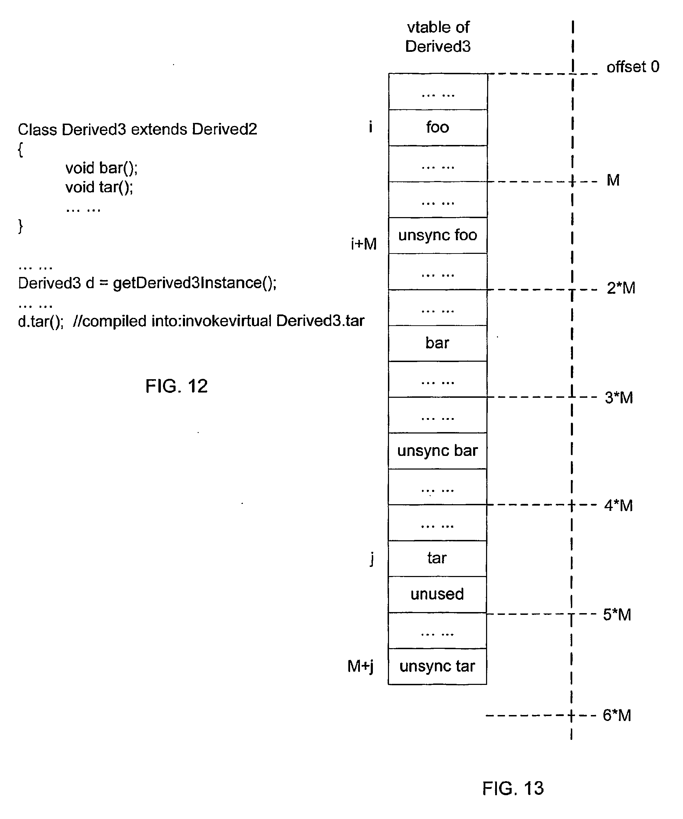

Figs. 12 and 13 provide example code that, if dynamic class loading is supported, will result in N being greater than M at block 804 of Fig. 8, thereby causing the JIT compiler 114 (Fig. 1) to perform the functions associated with blocks 812-816 of Fig. 8. In particular, if the class "Derived3" is added after the code shown in Figs. 9 and 10 has been compiled, the number of entries N associated with the original vtable for "Derived3" will exceed the value M calculated for the vtables shown in Fig. 11. As a result, when the JIT compiler 114 desynchronizes the code shown in Fig. 12 it generates the vtable shown in Fig. 13 by performing the functions associated with blocks 812-818 of Fig. 8.

The desynchronization techniques described herein can be easily reversed by restoring all prior synchronization semantics. For example, in the case where dynamic class loading is supported, the loading of a new class may invalidate earlier generated synchronization removal analysis (e.g., escape analysis) results that require resynchronization of desynchronized code. In the case of desynchronized blocks, synchronization statements can be re-inserted into the code areas from which they were removed. In the case of early binding calls, the target code address can be patched back to the original target code address. In the case of late binding calls, "call[vtable+offset+M] can be patched to "call[vtable+offset]."

Fig. 14 is a block diagram of an example processor system 1420 that may be used to implement the apparatus and methods described herein. As shown in Fig. 14, the processor system 1420 includes a processor 1422 that is coupled to an interconnection bus or network 1424. The processor 1422 may be any suitable processor, processing unit or microprocessor such as, for example, a processor from the Intel Itanium^{®} family, Intel X-Scale® family, the Intel Pentium® family, etc. Although not shown in Fig. 14, the system 1420 may be a multi-processor system and, thus, may include one or more additional processors that are identical or similar to the processor 1422 and which are coupled to the interconnection bus or network 1424.

The processor 1422 of Fig. 14 is coupled to a chipset 1428, which includes a memory controller 1430 and an input/output (I/O) controller 1432. As is well known, a chipset typically provides I/O and memory management functions as well as a plurality of general purpose and/or special purpose registers, timers, etc. that are accessible or used by one or more processors coupled to the chipset. The memory controller 1430 performs functions that enable the processor 1422 (or processors if there are multiple processors) to access a system memory 1434, which may include any desired type of volatile memory such as, for example, static random access memory (SRAM), dynamic random access memory (DRAM), etc. The I/O controller 1432 performs functions that enable the processor 1422 to communicate with peripheral input/output (I/O) devices 1436 and 1438 via an I/O bus 1440. The I/O devices1436 and1438. may be any desired type of I/O device such as, for example, a keyboard, a video display or monitor, a mouse, etc. While the memory controller 1430 and the I/O controller 1432 are depicted in Fig. 14 as separate functional blocks within the chipset 1428, the functions performed by these blocks may be integrated within a single semiconductor circuit or may be implemented using two or more separate integrated circuits.

## Claims

1. A method of desynchronizing program code, comprising:
determining (702) during just-in-time compilation of the program code whether synchronization is of a block or a-method call; and
modifying the program code during just-in-time compilation of the program code based on whether synchronization is of a block or a method call; and
**characterized in that**
modifying the program code includes modifying (714) one or more virtual dispatch tables associated with the block or method call, wherein modifying (714) one or more virtual dispatch tables includes extending (806) the one or more virtual dispatch tables by a number of entries defined at compile time to form an extended virtual dispatch table and storing addresses associated with desynchronized portions of the program code in a last group of entries within the extended virtual dispatch table.

2. A method as defined in claim 1, wherein the program code includes at least one of a synchronization keyword, a synchronization statement and a synchronization primitive.

3. A method as defined in any of claims 1 to 2, wherein the program code is associated with a dynamic programming language.

4. A method as defined in claim 3, wherein the dynamic programming language is Java-based.

5. A method as defined in any preceding claim, wherein modifying the program code includes removing (704) at least one of a lock function and an unlock function from the program code.

6. A method as defined in claim 5, further including inserting (706) at least one memory barrier in the program code after removing (704) the at least one of the lock function and the unlock function from the program code.

7. A method as defined in any preceding claim, wherein modifying the program code includes cloning (710) the program code without synchronization to form desynchronized program code.

8. A method as defined in claim 7, further including replacing (712) a call target address of the program code with an address associated with the desynchronized program code.

9. A method as defined in any preceding claim, wherein modifying (714) each virtual dispatch table further includes offsetting (716) each virtual dispatch table call associated with the program code to reference a modified portion of the virtual dispatch table.

10. A method as defined in any preceding claim, wherein modifying (714) the virtual dispatch table includes slicing (812) the virtual dispatch table into segments and extending (814) each of the segments by a number of entries defined at compile time to form a plurality of extended virtual dispatch table segments.

11. A method as defined in claim 10, further including storing (816) addresses associated with desynchronized portions of the program code in each of the extended virtual dispatch table segments.

12. A method as defined in claim 10 or claim 11, further including concatenating (818) the plurality of extended virtual dispatch table segments to form an extended virtual dispatch table.

13. A computer system (1420), comprising:
a memory (1434); and
a processor (1422) coupled to the memory and capable of executing a managed runtime environment (112) including a just-in-time compiler (114), wherein the just-in-time compiler is configured to:
determine (702) during just-in-time compilation of the program code whether synchronization is of a block or a method call; and
modify the program code during just-in-time compilation of the program code based on whether synchronization is of a block or a method call; and is
**characterized in that**
modifying the program code includes modifying (714) one or more virtual dispatch tables associated with the block or method call, wherein modifying (714) one or more virtual dispatch tables includes extending (806) the one or more virtual dispatch tables by a number of entries defined at compile time to form an extended virtual dispatch table and storing addresses associated with desynchronized portions of the program code stored in a last group of entries within the extended virtual dispatch table.

14. A computer system (1420) as defined in claim 13, wherein the program code includes at least one of a synchronization keyword, a synchronization statement and a synchronization primitive.

15. A computer system (1420) as defined in any of claims 13 to 14, wherein the program code is associated with a dynamic programming language.

16. A computer system (1420) as defined in claim 15, wherein the dynamic programming language is Java-based.

17. A computer system (1420) as defined in claim any of claims 13 to 16, wherein the just-in-time compiler is configured to modify the program code by removing (704) at least one of a lock function and an unlock function from the program code.

18. A computer system (1420) as defined in claim 17, wherein the just-in-time compiler is configured to insert (706) at least one memory barrier in the program code after removing (704) the at least one of the lock function and the unlock function from the program code.

19. A computer system (1420) as defined in any of claims 13 to 18, wherein the just-in-time compiler is configured to modify the program code by cloning (710) the program code without synchronization to form desynchronized program code.

20. A computer system (1420) as defined in claim 19, wherein the just-in-time compiler is configured to replace (712) a call target address of the program code with an address associated with the desynchronized program code.

21. A computer system (1420) as defined in any of claims 13 to 20, wherein the just-in-time compiler is configured to offset (716) a virtual dispatch table call associated with the program code to reference a modified portion of the virtual dispatch table.

22. A computer system (1420) as defined in any of claims 13 to 21 wherein the just-in-time compiler is configured to modify (714) the virtual dispatch table by slicing (812) the virtual dispatch table into segments and extending (814) each of the segments a number of entries defined at compile time to form a plurality of extended virtual dispatch table segments.

23. A computer system (1420) as defined in claim 22, wherein the just-in-time compiler is configured to store (816) addresses associated with desynchronized portions of the program code in each of the extended virtual dispatch table segments.

24. A computer system (1420) as defined in claim 22 or claim 23, wherein the just-in-time compiler is configured to concatenate (818) the plurality of extended virtual dispatch table segments to form an extended virtual dispatch table.

25. A computer program comprising computer program code means adapted to perform all the steps of any of claims 1 to 12 when said program is run on a computer.

## Patentansprüche

1. Verfahren zum Entsynchronisieren von Programmcodes, umfassend:
Bestimmen (702) während der Just-in-Time-Compilierung des Programmcodes, ob die Synchronisierung einen Block oder einen Methodenaufruf betrifft, und
**gekennzeichnet dadurch, daß**
das Modifizieren des Programmcodes das Modifizieren (714) einer oder mehrerer mit dem Block oder dem Methodenaufruf assoziierter virtueller Verzweigungstabellen beinhaltet, wobei das Modifizieren (714) einer oder mehrerer virtueller Verzweigungstabellen das Erweitern (806) der einen oder mehreren virtuellen Verzweigungstabellen durch eine Anzahl von zur Kompilierungszeit definierten Einträgen, um eine erweiterte virtuelle Verzweigungstabelle zu bilden, sowie das Speichern von mit entsynchronisierten Abschnitten des Programmcodes assoziierten Adressen in einer letzten Gruppe von Einträgen innerhalb der erweiterten virtuellen Verzweigungstabelle beinhaltet.

2. Verfahren nach Anspruch 1, wobei der Programmcode ein Entsynchronisierungskennwort, eine Synchronisierungsanweisung und/oder ein Synchronisierungselement enthält.

3. Verfahren nach einem der Ansprüche 1 oder 2, wobei der Programmcode mit einer dynamischen Programmiersprache assoziiert ist.

4. Verfahren nach Anspruch 3, wobei die dynamische Programmiersprache Java-basiert ist.

5. Verfahren nach einem der vorhergehenden Ansprüche, wobei das Modifizieren des Programmcodes das Entfernen (704) einer Sperrfunktion und/oder einer Entsperrfunktion aus dem Programmcode beinhaltet.

6. Verfahren nach Anspruch 5, ferner umfassend das Einfügen (706) von mindestens einer Speicherbarriere im Programmcode, nachdem die Sperrfunktion und/oder die Entsperrfunktion aus dem Programmcode entfernt worden sind (704).

7. Verfahren nach einem der vorhergehenden Ansprüche, wobei das Modifizieren des Programmcodes das Klonen (710) des Programmcodes ohne Synchronisierung zum Bilden von entsynchronisiertem Programmcode beinhaltet.

8. Verfahren nach Anspruch 7, ferner umfassend das Ersetzen (712) einer Aufruf-Zieladresse des Programmcodes durch eine mit dem entsynchronisierten Programmcode assoziierte Adresse.

9. Verfahren nach einem der vorhergehenden Ansprüche, wobei das Modifizieren (714) jeder virtuellen Verzweigungstabelle ferner das Versetzen (716) jedes mit dem Programmcode assoziierten Aufrufs der virtuellen Verzweigungstabelle zur Bezugnahme auf einen modifizierten Abschnitt der virtuellen Verzweigungstabelle beinhaltet.

10. Verfahren nach einem der vorhergehenden Ansprüche, wobei das Modifizieren (714) der virtuellen Verzweigungstabelle das Aufschneiden (812) der virtuellen Verzweigungstabelle in Segmente und das Erweitern (814) jedes der Segmente mit einer Anzahl von zur Kompilierungszeit definierten Einträgen zum Bilden mehrerer erweiterter virtueller Verzweigungstabellensegmente beinhaltet.

11. Verfahren nach Anspruch 10, ferner umfassend das Speichern (816) von mit entsynchronisierten Abschnitten des Programmcodes assoziierten Adressen in jedem der erweiterten virtuellen Verzweigungstabellensegmente.

12. Verfahren nach Anspruch 10 oder 11, ferner umfassend das Verketten (818) der mehreren erweiterten virtuellen Verzweigungstabellensegmente zum Bilden einer erweiterten virtuellen Verzweigungstabelle.

13. Computersystem (1420), umfassend:
einen Speicher (1434), und
einen Prozessor (1422), der mit dem Speicher verbunden ist und in der Lage ist, eine verwaltete Laufzeitumgebung (112) mit einem Just-in-Time-Compiler (114) auszuführen, wobei der Just-in-Time-Compiler zu folgendem eingerichtet ist:
während des Just-in-Time-Compilierung des Programmcodes zu bestimmen (702), ob sich die Synchronisierung auf einen Block oder einen Methodenaufruf bezieht, und
den Programmcode während der Just-in-Time-Compilierung des Programmcodes abhängig davon, ob sich die Synchronisierung auf einen Block oder einen Methodenaufruf bezieht, zu modifizieren,
**gekennzeichnet dadurch, daß**
das Modifizieren des Programmcodes das Modifizieren (714) einer oder mehrerer mit dem Block oder dem Methodenaufruf assoziierter virtueller Verzweigungstabellen beinhaltet, wobei das Modifizieren (714) einer oder mehrerer virtueller Verzweigungstabellen das Erweitern (806) der einen oder mehreren virtuellen Verzweigungstabellen durch eine Anzahl von zur Kompilierungszeit definierten Einträgen, um eine erweiterte virtuelle Verzweigungstabelle zu bilden, sowie das Speichern von mit entsynchronisierten Abschnitten des Programmcodes assoziierten Adressen in einer letzten Gruppe von Einträgen innerhalb der erweiterten virtuellen Verzweigungstabelle beinhaltet.

14. Computersystem (1420) nach Anspruch 13, wobei der Programmcode ein Synchronisierungskennwort, eine Synchronisierungsanweisung und/oder ein Synchronisierungselement enthält.

15. Computersystem (1420) nach einem der Ansprüche 13 oder 14, wobei der Programmcode mit einer dynamischen Programmiersprache assoziiert ist.

16. Computersystem (1420) nach Anspruch 15, wobei die dynamische Programmiersprache Java-basiert ist.

17. Computersystem (1420) nach einem der Ansprüche 13 bis 16, wobei der Just-in-Time-Compiler dazu eingerichtet ist, den Programmcode durch Entfernen (704) einer Sperrfunktion und/oder einer Entsperrfunktion aus dem Programmcode zu modifizieren.

18. Computersystem (1420) nach Anspruch 17, wobei der Just-in-Time-Compiler dazu eingerichtet ist, mindestens eine Speicherbarriere im Programmcode einzufügen, nachdem die Sperrfunktion und/oder die Entsperrfunktion aus dem Programmcode entfernt worden sind (704).

19. Computersystem (1420) nach einem der Ansprüche 13 bis 18, wobei der Just-in-Time-Compiler dazu eingerichtet ist, den Programmcode durch Klonen (710) des Programmcodes ohne Synchronisierung zum Bilden von entsynchronisiertem Programmcode zu modifizieren.

20. Computersystem (1420) nach Anspruch 19, wobei der Just-in-Time-Compiler dazu eingerichtet ist, eine Aufrufzieladresse des Programmcodes durch eine mit dem entsynchronisierten Programmcode assoziierte Adresse zu ersetzen (712).

21. Computersystem (1420) nach einem der Ansprüche 13 bis 20, wobei der Just-in-Time-Compiler dazu eingerichtet ist, einen mit dem Programmcode assoziierten Aufruf einer virtuellen Verzweigungstabelle zur Bezugnahme auf einen modifizierten Abschnitt der virtuellen Verzweigungstabelle zu versetzen (716).

22. Computersystem (1420) nach einem der Ansprüche 13 bis 21, wobei der Just-in-Time-Compiler dazu eingerichtet ist, die virtuelle Verzweigungstabelle durch Aufschneiden (812) der virtuellen Verzweigungstabelle in Segmente und Erweitern (814) jedes der Segmente mit einer Anzahl von zur Compilierungszeit definierten Einträgen zu modifizieren (714), um mehrere erweiterte virtuelle Verzweigungstabellensegmente zu bilden.

23. Computersystem (1420) nach Anspruch 22, wobei der Just-in-Time-Compiler dazu eingerichtet ist, mit entsynchronisierten Abschnitten des Programmcodes assoziierte Adressen in jedem der erweiterten virtuellen Verzweigungstabellensegmente zu speichern (816).

24. Computersystem (1420) nach Anspruch 22 oder 23, wobei der Just-in-Time-Compiler dazu eingerichtet ist, die mehreren erweiterten virtuellen Verzweigungstabellensegmente zu verketten, um eine erweiterte virtuelle Verzweigungstabelle zu bilden.

25. Computerprogramm umfassend Computerprogrammcodeteile, die dazu ausgelegt sind, alle Schritte eines der Ansprüche 1 bis 12 auszuführen, wenn das Programm auf einem Computer laufen gelassen wird.

## Revendications

1. Procédé de désynchronisation d'un code de programme, consistant à :
déterminer (702) pendant la compilation juste-à-temps du code de programme si la synchronisation est due à un appel de bloc ou de méthode ; et
modifier le code de programme pendant la compilation juste-à-temps du code de programme selon que la synchronisation est un appel de bloc ou de méthode ; et
**caractérisé en ce que**
la modification du code de programme consiste à modifier (714) une ou plusieurs tables de répartition virtuelles associées à l'appel de bloc ou de méthode, dans lequel la modification (714) d'une ou plusieurs tables de répartition virtuelles consiste à étendre (806) les une ou plusieurs tables de répartition virtuelles par un certain nombre d'entrées définies au moment de la compilation pour former une table de répartition virtuelle étendue, et à stocker des adresses associées à des parties désynchronisées du code de programme dans un dernier groupe d'entrées dans la table de répartition virtuelle étendue.

2. Procédé selon la revendication 1, dans lequel le code de programme comprend au moins l'un d'un mot clé de synchronisation, d'une instruction de synchronisation et d'une primitive de synchronisation.

3. Procédé selon l'une quelconque des revendications 1 à 2, dans lequel le code de programme est associé à un langage de programmation dynamique.

4. Procédé selon la revendication 3, dans lequel le langage de programmation dynamique est basé sur Java.

5. Procédé selon l'une quelconque des revendications précédentes, dans lequel la modification du code de programme comprend l'élimination (704) d'au moins l'une d'une fonction de verrouillage et d'une fonction de déverrouillage du code de programme.

6. Procédé selon la revendication 5, consistant à insérer (706) au moins une barrière de mémoire dans le code de programme après avoir éliminé (704) l'au moins une de la fonction de verrouillage et de la fonction de déverrouillage du code de programme.

7. Procédé selon l'une quelconque des revendications précédentes, dans lequel la modification du code de programme consiste à cloner (710) le code de programme sans synchronisation pour former un code de programme désynchronisé.

8. Procédé selon la revendication 7, consistant en outre à remplacer (712) une adresse cible d'un appel du code de programme par une adresse associée au code de programme désynchronisé.

9. Procédé selon l'une quelconque des revendications précédentes, dans lequel la modification (714) de chaque table de répartition virtuelle consiste en outre à décaler (716) chaque appel de la table de répartition virtuelle associé au code de programme pour faire référence à une partie modifiée de la table de répartition virtuelle.

10. Procédé selon l'une quelconque des revendications précédentes, dans lequel la modification (714) de la table de répartition virtuelle consiste à découper (812) la table de répartition virtuelle en des segments et à étendre (814) chacun des segments par un certain nombre d'entrées définies au moment de la compilation afin de former une pluralité de segments étendus de la table de répartition virtuelle.

11. Procédé selon la revendication 10, consistant en outre à stocker (816) des adresses associées à des parties désynchronisées du code de programme dans chacun des segments étendus de la table de répartition virtuelle.

12. Procédé selon la revendication 10 ou 11, consistant en outre à concaténer (818) la pluralité de segments étendus de la table de répartition virtuelle pour former une table de répartition virtuelle étendue.

13. Système informatique (1420), comprenant :
une mémoire (1434) ; et
un processeur (1422) relié à la mémoire et capable d'exécuter un environnement d'exécution géré (112) comprenant un compilateur juste-à-temps (114), dans lequel le compilateur juste-à-temps est configuré pour :
déterminer (702), pendant la compilation juste-à-temps du code de programme, si la synchronisation est effectuée par appel de bloc ou de méthode ; et
modifier le code du programme pendant la compilation juste-à-temps du code de programme selon que la synchronisation est effectuée par appel de bloc ou de méthode ; et est
**caractérisé en ce que**
la modification du code de programme consiste à modifier (714) une ou plusieurs tables de répartition virtuelles associées à l'appel de bloc ou de méthode, dans lequel la modification (714) d'une ou plusieurs tables de répartition virtuelles consiste à étendre (806) les une ou plusieurs tables de répartition virtuelles par un certain nombre d'entrées définies au moment de la compilation afin de former une table de répartition virtuelle étendue, et à stocker des adresses associées à des parties désynchronisées du code de programme stocké dans un dernier groupe d'entrées dans la table de répartition virtuelle étendue.

14. Système informatique (1420) selon la revendication 13, dans lequel le code de programme comprend au moins un mot clé de synchronisation, une instruction de synchronisation et une primitive de synchronisation.

15. Système informatique (1420) selon l'une quelconque des revendications 13 à 14, dans lequel le code de programme est associé à un langage de programmation dynamique.

16. Système informatique (1420) selon la revendication 15, dans lequel le langage de programmation dynamique est à base de Java.

17. Système informatique (1420) selon l'une quelconque des revendications 13 à 16, dans lequel le compilateur juste-à-temps est configuré pour modifier le code de programme par élimination (704) d'au moins l'une d'une fonction de verrouillage et d'une fonction de déverrouillage du code de programme.

18. Système informatique (1420) selon la revendication 17, dans lequel le compilateur juste-à-temps est configuré pour insérer (706) au moins une barrière de mémoire dans le code de programme après avoir éliminé (704) l'au moins une de la fonction de verrouillage et de la fonction de déverrouillage du code de programme.

19. Système informatique (1420) selon l'une quelconque des revendications 13 à 18, dans lequel le compilateur juste-à-temps est configuré pour modifier le code de programme en clonant (710) le code de programme sans synchronisation pour former un code de programme désynchronisé.

20. Système informatique (1420) selon la revendication 19, dans lequel le compilateur juste-à-temps est configuré pour remplacer (712) une adresse cible d'un appel du code de programme par une adresse associée au code de programme désynchronisé.

21. Système informatique (1420) selon l'une quelconque des revendications 13 à 20, dans lequel le compilateur juste-à-temps est configuré pour décaler (716) un appel de la table de répartition virtuelle associé au code de programme pour faire référence à une partie modifiée de la table de répartition virtuelle.

22. Système informatique (1420) selon l'une quelconque des revendications 13 à 21, dans lequel le compilateur juste-à-temps est configuré pour modifier (714) la table de répartition virtuelle en découpant (812) la table de répartition virtuelle en des segments et en étendant (814) chacun des segments d'un certain nombre d'entrées définies au moment de la compilation pour former une pluralité de segments étendus de la table de répartition virtuelle.

23. Système informatique (1420) selon la revendication 22, dans lequel le compilateur juste-à-temps est configuré pour stocker (816) des adresses associées à des parties désynchronisées du code de programme dans chacun des segments étendus de la table de répartition virtuelle.

24. Système informatique (1420) selon la revendication 22 ou 23, dans lequel le compilateur juste-à-temps est configuré pour concaténer (818) la pluralité de segments étendus de la table de répartition virtuelle pour former une table de répartition virtuelle étendue.

25. Programme informatique comprenant un moyen à code de programme informatique conçu pour exécuter toutes les étapes de l'une quelconque des revendications 1 à 12 lorsque ledit programme est exécuté sur un ordinateur.
